# EUROPEAN PATENT APPLICATION

(11) **EP 1 762 789 A2**
(43) Date of publication of application: **14.03.2007**
(21) Application number: 06019665.6
(22) Date of filing: 16.03.2001
(51) Int. Cl.: F24D 3/14

(54) **A coating assemblage and a coating element for a floor, wall or roof**

(30) Priority: 16.03.2000 FI 20000611
(62) Divisional of application: 01919511.4
(71) Applicant: Ilvolankoski Oy, 00530 Helsinki (FI)
(72) Inventor: Kukkonen, Matti, 00530 Helsinki (FI)
(74) Representative: Lahti, Heikki

(57) **Abstract**

An object of the invention is an coating assemblage, which comprises a coating (3) that is arranged above a supporting structure (1) and selectively an intermediate layer (2), which is arranged above the supporting structure and under the coating. According to the invention, for receiving a heating means there is formed heat transfer channels (4"') at least to the bottom surface of the coating by means of grooves (48), a form of the cross section profile of which heating means corresponds at least part of the form of the outer circumference defining - the channel.

## Description

The present invention concerns also a coating element for a floor, wall or roof, which element is meant to form when placed sidewise and/or endwise on a supporting constructing or on a lower intermediate layer, which is under the coating, the coating to resurface a floor, a wall and/or ceiling.

In connection of the present invention, the definition support structure means a bottom structure or an equivalent foundation for the coating and/or an intermediate layer, which can be under the coating and which accomplished by casting or wood beaming.

In connection with the present invention, by the qualifiers, the coating element and coating are generally referred to all massive wooden or wood based and/or wood containing or wood not containing or totally artificial, for example plastic solutions of the coating elements and coatings. It is to be noted that the coating element can be formed to the form of the element also by heat pressing. Still it is except a coating element and coating emphasised that qualifier the floor can refer also to the ceiling or wall so the coating element can be also the coating element of a wall or ceiling and correspondingly coating can be the coating of a wall or ceiling also.

In connection with the invention out for the sake of simplicity it is used in the future:
- qualifier coating element, when the coating element of a floor, wall or ceiling is meant,
- qualifier coating, when the coating of a floor, wall or ceiling is meant and
- coating assemblage, when a coating is meant in the floor, wall or ceiling an assemblage.

In question in connection with the invention, by the qualifier, the intermediate layer is referred to the layer that is between the between the coating and the support structure, which layer is formed of
- a back plate that closes a groove or grooves, which is/are formed to the lower surface of the coating, and hence forms heating channels with the same,
- Platon^{™} back plate with knobs or a like back plate with risings or
- a back plate as well as of a foil or film or sheet to be installed between the back plate and the coating depending on coating and/or heating means.

The massive wooden coating elements of the coatings are for example mosaic parquet elements, rod parquet elements, board elements and corresponding element solutions. Wood based and/or wood containing coating elements of the coatings, which include at least one wooden or wood based material layer that can be an inner layer or a surface layer, are different board parquet elements, laminate elements and wood laminated element solutions. Different tile solutions and carpet solutions are non-wood solutions, such as for example solutions of rock materials, and totally artificial solutions, such as for example solutions of plastics.

A desired area can be covered totally or partly by the coating elements. It is previously known that the coating elements can be connected to each other by interlock, which comprises compatible groove and tongue. The groove is taken to mean usually a groove that has been formed to the longitudinal side and/or to the end side of the coating element and the tongue is taken to mean a projection, which fits in the groove, being usually on the longitudinal side and/or on the end side of the coating element. The groove and tongue form, when fitted within each other, the interlock between the coating elements.

It is previously known that to accomplish a firm interlock, glue materials are used, or that there are locking organs in a tongue and/or groove of the interlock. It is previously known also that the coating elements can be connected without any interlocking, in, which case it is usually a question of a mosaic parquet coating, of a small rod parquet coating, of a tile coating or of a carpet coating.

Because the joining of coating elements with interlock or without interlock or a production method ofthe coating elements is not essential from the point of the present invention, it is emphasised that the invention in question applies to all kinds of coating elements, which are suitable for forming of coatings irrespective of the fact whether an interlock is used for the combining of coating elements or not.

Typically the coating assemblage is uniform and rests on a support base or on a wood beam structure. It is known that the heating can be arranged in the coating assemblage or at least below the coating usually in the support base or in the wood beam structure or to a similar foundation. This kind of a traditional heating solution is not suited well for all coatings and the same is thermally disadvantageous to a variety of material, for example wood or wood containing coating materials, wherefore a heat transition to room space from the floor or wall or ceiling is weak. Heating to be installed under the coating assemblage, for example in a heat conducting is also a technically and economically considerable investment.

One goal of the invention is to eliminate or at least to reduce drawbacks and weaknesses, which are related to the traditional coating elements and to make the embedding of the heating means possible to the coating and/or inside the coating element or in the side edge or in the lower surface in the direction of the groove and/or at an corner in regard to the groove, the necessary thermal flux density and temperature gradient so that the coating between the surface, which is limited to the state of the coating to be warmed and the heating means that has been embedded in the assemblage can be kept to the state to be warmed from the heating means as low as possible.

The second goal of the invention is to accomplish the coating, the assemblage in, which the contact surface of the heating means for the heat transfer with coating to carry out the heating is as big as possible.

The goals of the invention in question have been generally reached with the coating assemblage for a floor or a wall or roof, which assemblage comprises a supporting/carrying layer and optionally an intermediate layer arranged on the supporting layer and a coating layer arranged on the intermediate layer or on the supporting layer, whereby there is not the intermediate layer. Every coating can consists of combined coating elements, for example, such that there are formed to the coating assemblage by means of grooves and/or hollows and/or bores heat transfer channels for receiving heat division elements and/or heat transfer medium of heating means, whereby a cross section profile or the form of an outer circle of the received heating means corresponds at least part of the form of the surface defining the channel.

It is advantageous that the cross section profile of the heat division element corresponds at least to the cross section profile of the facing part of the internal channel according to a its performance example such that the cross section profile of the heat division element corresponds essentially to the internal cross section profile of the channel.

According to the invention it is especially recommended that for its part the cross section profile of the heat division element corresponds to the internal cross section profile of the channel according to a shape. Then the heating means can be brought at least partly, as corresponding to the shape, in the channels, which are in the assemblage, so that the heating element or the heating medium will go in the assemblage. So the heating solution, which is in accordance with the invention, makes possible, in relation to the traditional solutions, in order to achieve a same heating effect via the coating into the room space, that the thermal flux density as well as the temperature gradient and the heat division between the heating element/heating medium and the coating assemblage is minor. So a local thermal stress and the heat division into the coating and further into the space to be warmed is even.

The goals of the invention can be reached also with a coating element for a floor, wall or roof, which element is meant to form when placed sidewise and/or endwise on a supporting constructing or on a lower intermediate layer, which is under the coating, the coating to resurface a floor, a wall and/or ceiling, for example such that the coating element comprises heat transfer channels for receiving a heating means, i.e, heat division element and/or heat transfer medium, which heat transfer channels are formed by means of grooves and/or deepenings and/or borings and the cross section profile of a flow area of which or the form of the outer circumference of which corresponds at least part of the form of outer circumference of the heating means,

From the advantages of the invention, one can mention as follows.

The invention has an especially big value in the blocks of flats. Mainly for example the under floor heating has not been really used in other premises than only in the bathrooms at all because of expensive acquisition costs. The thermal energy needed by the blocks of flats is produced because of a cheap price mainly with the help ofthe district heating. This cheap energy fits in use of the heating, which functions with fluid well. The electricity-operated heating will become expensive also from its operating costs. The present heating pipe system or electric heating cable must be always be installed in the infrastructure, for example in the case of the floor, inside concrete, The heating pipe system it is feared damage that the damaging of the leak or of the electric heating cable causes a big structural and economic drawback. These reasons also have restricted the introduction of the under floor heating into the blocks of flats for its part.

In the coating assemblage, which is in accordance with the invention, is not necessarily needed in any way a special heating water pipe or electric cable or any other heat division elements. The economic alternative is to use fluid or gaseous or steam-like medium as such in the channels. In that case the cost saving will consist of the fact that the heat transfer channel set in the coating replaces the heating water pipe or the electric cable and possible other types of heat division elements, which form about 80% of the investment costs in known heating alternatives and which are typically in the support structure.

Further, the heat transfer is efficient from the heating means to the coating and the heat transfer is further economical from the coating to the room space, thanks to the present invention. All material, which is under the said coating assemblage, serves as the thermal insulator. This support structure does not require high heat conducting characteristics and heat storage properties, so the heat insulation need of the whole structure is smaller and less thermal energy is needed. When a coating assemblage, which is in accordance with the invention, is used, the heat transfer from heating means, which is typically a heat transfer medium or heat division element, via the coating to the room space is faster. Then the lower temperature of the heating means or smaller electric power can used and to the changes in the heat need and can be reacted fast Furthermore, in the coating assemblage, which is in accordance with the present invention, can be also used sources of energies, such as geothermal heat, air heating or sun heat, which recur better, thanks to smaller temperatures or electric powers. Furthermore, the temperature of the surface of the coating is lower so the use of the floor is more pleasant and the damaging risks of the coating material decrease.

A leak of the fluid heat transfer medium to the lower structures can be prevented in all the possible situations when the lower surface and the edge surfaces of the coating assemblage, which consists of coating or coating and intermediate layer, are set close to a protection sheet, which can be for example a plastic sheet The protection sheet forms under the coating assemblage, which consists of coating elements coating and which has been equipped a medium circulation, where the fluid heal transfer medium circulates, a tight trough, which is apart from the lower structures. This kind of a trough can be used also as a plate to close grooves, which are on the lower surface of the coating. Because the edges of the trough reach above the coating, the heat transfer medium can get only onto the surface of the coating so the possible leak can be fast stated and the leak can be stopped easily by closing the circulation of the heat transfer the medium by means of a flow valve.

Concerning technical details and attainable advantages that can be reached by the same, it is referred to following special part of the explanation, which explains the present invention.

An account is given to the invention in the following with the help of some its advantageous embodiments by referring to the patent drawings only as an example, where
FIG:1 presents the coating, assemblage which is in accordance with a first embodiment of the invention,
FIG.2 presents the coating assemblage which is in accordance with a second embodiment of the invention,
FIG.3 presents the coating assemblage which is in accordance with a third embodiment of the invention,
FIG.4 presents the coating assemblage which is in accordance with a fourth embodiment of the invention,
FIG.5 presents the coating assemblage which is in accordance with a fifth embodiment of the invention,
FIG.6 presents the coating assemblage which is in accordance with a sixth embodiment of the invention,
FIG.7a, FIG.7b, FIG.7c present heat division elements, which can be integrated in the heating element, which can belong to the coating assemblage, heat division elements, which are in accordance with the figures FTG.7a and FIG.7b, can be used also as joint elements,
Fig.8 presents, as seen from above, the coating assemblage, which is accordance with an embodiment of the present of the invention, and
Fig.9 presents, as seen from above, the coating assemblage, which is accordance with another embodiment of the present of the invention.

The invention is described in the following by means of such a coating assemblage for a floor or a wall or roof, which assemblage comprises a supporting layer 1 and selectively an intermediate layer 2, which is arranged on the supporting layer 1, and a coating layer 3, which is arranged on the intermediate layer 2 or a coating layer 3, which is arranged without the intermediate layer 2 on the supporting layer 1, wherein the coating layer 3 consists of joined coating elements 31, which can be so called massive or multi-layered coating elements.

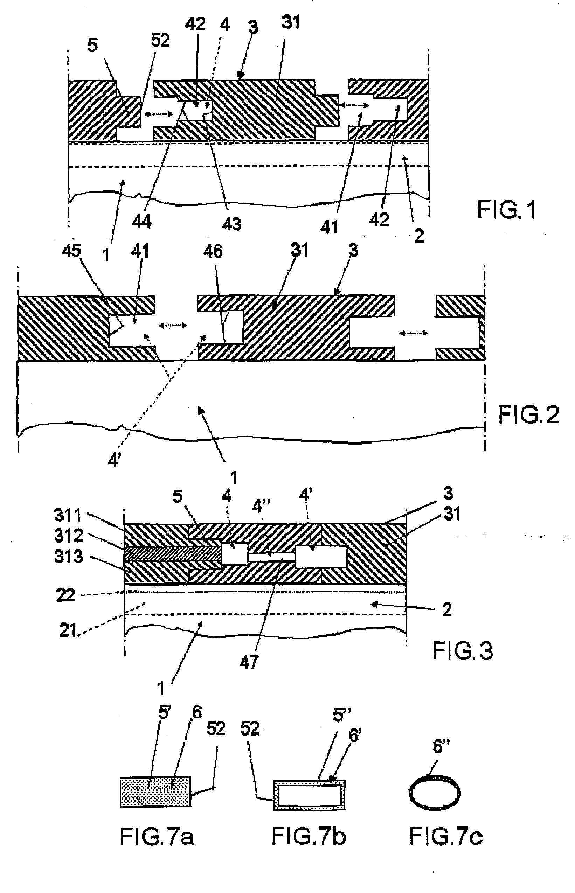

In the following the structure of the flooring the 3 forms of application of which are explained with the help, qualifier of figures 1, 2, is referred to coating assemblage and flooring is pointed to with the qualifier, coating and the element of the flooring is pointed to with the qualifier coating element.

Coating 1, 2, 3 a heat transfer has been generated to the assemblage with the help of the grooves and/or hollows 41, 42, 47, 48, 49 and/or of bores channels 4, 4', 4", 4''', 4"". The heating means 6, which is fitted in the heat transfer channel 6', 6" the can be a heat division element or heat transfer medium. It is used from these, in the following, a qualifier a heating means for the sake of simplicity. To receive the heating means, the form of the profile of the cross section or the form of the outer circle of the heating means, which is to be fitted in the heat transfer channel, corresponds at least part of the form of the surface that defines the heat transfer channel.

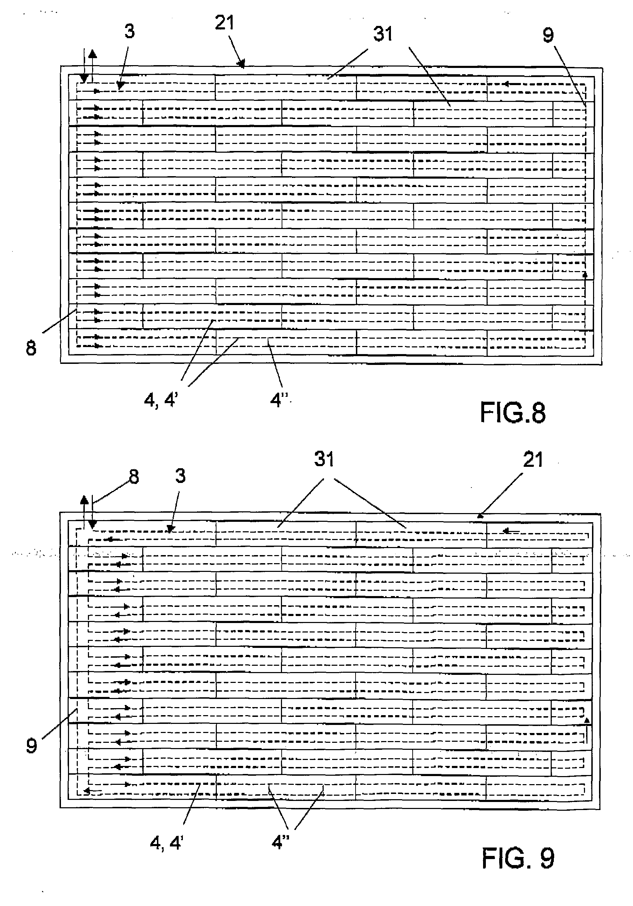

There are presented, in the figures FIG.7a, FIG.7b and FIG.7c, different advantageous examples of the heating means 6, 6' ja 6" that can be adapted to the heat transfer channel 4, 4', 4", 4"', 4"" or to joint groove 41 or to bottom groove 42, The heat transfer channel or a joint groove or a bottom groove is formed of a groove and/or deepening and/or bore 41, 42, 47, 48, 49 that is done to the heating element 31.

There has been presented in the figures FIG.7a and FIG.7b an embodiment of the heating means, which can be used also as joint elements 5', 5" of coating elements 31 when the same is fitted to the heat transfer channel 4. In that case the groove and/or deepening 41 in the element, that is the joint groove in the element, will form the heat transfer channel.

In addition to it, that the heat transfer element is used as the heating means 6, 6', 6", the channel for heat transfer medium may function as such as the heat transfer channel 4, 4', 4", 4"', 4"". Then the inner surface of the channel can be plated/sealed by a coating, in which case tightness of the channel can be improved and leaks of the heat transfer medium can be eliminated.

The floor heating solution comprises the channel 4, 4', 4", 4''', 4"" for the heating means 6, 6', 6". Thus a coating has been accomplished to the assemblage, 1, 2, 3 an internal integrated floor heating, which can be, for example, a heating solution with a medium circulation that has been integrated into the assemblage coating and/or an electric heating solution.

When it is a heating solution with the medium circulation, a flow of the medium can be laminar or turbulent The medium can circulate in a form that deviates from a fluid form, for example in a steam like or gaseous form or as a fog.

The heat division element 6, 6', 6" or the heat transfer channel 4, 4' for the heat transfer passes in the groove that has been done to the side face of element 31 and/or in the deepening 41, 42, which a neighbouring element seals as the heat transfer channel.

When the heating means 6, 6', 6", that is the heat division element 6, 6', 6" or the heat transfer channel 4" for the heat transfer medium, passes in the bore 47, which passes crosswise in regard to the side surface of the coating element 31, the channel combines the grooves or deepenings 41, 42, that have been made to the side surfaces of the coating element 31. The angle of the bore in regard to the side surface is ≤90° tai ≥90°, however, more advantageously essentially 90°.

The heating means 6, 6', 6", that is the heat division element or the heat transfer channel 4"', 4"" for the medium, can also can go in the groove 48, which that has been done to the bottom surface of coating element 31, and/or in a groove 49, which has been done to the upper surface of the one canying layer 1 or to the upper surfaces of the intermediate layer 2. In that case, the groove or the grooves will close, as the heat transfer channel, the layers of the assemblage, that is the lower carrying layer 1 or the optional intermediate layer 2 and the upper coating layer 3. There is a reason to emphasised that then intermediate layer can comprise several layers 21, 22. The upper layer 21 cab be a thin plastic layer or a transparency layer, in which case the lower layer 22 is made of stiffer material. Depending on the structure of the assemblage, the order of the layers can be also opposite, in the intermediate layer.

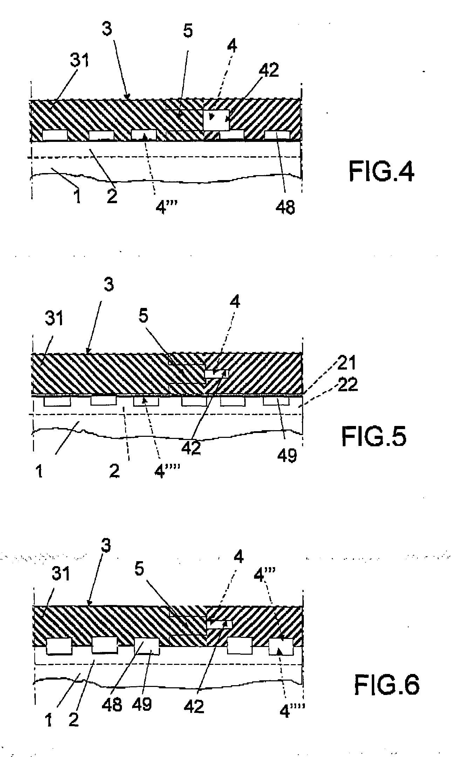

In the embodiments of the figures FIG.1,..., FIG.6, the set of heating channels is formed of the heat transfer channels 4, 4', 4", 4"', 4"" of a multilayered coating element or of the massive coating element 31 that has been presented in the figures, which channels have been made by machining, by drilling or by any corresponding processing that which removes material, and which channels can be
- grooves and/or deepenings 41, 42, which are in the side surfaces and/or end surfaces of the massive or multi-layered coating element, and/or
- cavities or bores 47 which are in the massive or multi-layered coating elements forming inner channels, and/or
- grooves and/or deepenings 48, which are in the bottom surfaces of the massive or multi-layered coating elements, and/or
- grooves and/or deepenings 49, which are a in the upper surfaces of the lower intermediate layer 2 or the carrying layer 1 that is under the upper massive or multi-layered coating elements.

The figures FIG.7a and FIG.7b are referred to. The heating means 6, 6', which is the heat division means, can serve as the joint element 5', 5", which fits into the grooves or deepenings 41, which have been made to the facing side surfaces of the two coating elements next to each other. In that case, the groove or the deepening will serve as the reception groove for the joint element, in other words as the joint groove 41 for coating elements. Tällöin ura tai syvennys toimii liitoselementin vastaanottourana eli päällyste elementtien liitosurana 41.

The figures FIG. 1, FIG.2 and FIG.3 are referred to. The joint grooves 41 that are existing on side and/or end surfaces of coating elements 31 have advantageously a parallelogram cross section for receiving a joint projection or 5 joint elements, 5', 5". When the joint projection or joint element is inside the joint groove on its meant place, the joint groove will reach in regard to the side surface of the coating element in the transversal direction, in other words in the joint direction, inside the coating element further or at least as far as where the joint projection or joint element does reach.

To joint the coating elements 31 together it is advantageous that there is in the joint groove 41, in the direction of the depth, as lengthening of the joint dimension, in other words of the reception depth, of joint projection 5 or of the joint element 5', 5" further a bottom deepening, in other words a bottom groove 42. The bottom groove can form heat transfer channels 4, which are illustrated in the figures FIG. 1 and FIG.3 both in the figures FIG.4, ... FIG.6. So the heat transfer channel 4 is limited into a space defined by the bottom surface 43 of the bottom groove 42 and side surfaces 44 both forehead surface 52 of the joint projections 5 or the joint element 5', 5" that has been fitted in the joint groove of the 41.

One must emphasise that the border zones of the bottom groove 42 and joint grooves, in other words of the reception groove 41, can have the different heights. When the heights are different, the stairs will form on the border zone of grooves as it has been presented in the figures FIG.1, FIG.3, FIG.5 and FIG.6. The said heights can also be identical as it is been presented in the figure FIG.4, in which case the bottom groove 41 and the bottom groove 42 are steplessly in connection to each other. The advantage of this latter realisation example is that the extension of the joint projection 5 or the joint element 5', 5" can be dimensioned more freely.

The side surfaces 44 of the bottom groove 42 can converge towards each other, in the direction towards the bottom surface of the bottom groove 43, so the bottom surface can indeed narrow to be a joint line of side surfaces faces in the bottom of the bottom groove. So the bottom groove can considerably deviate from the form of the parallelogram, however, that very form is very economical to produce. From the point of the operation only the existence of the bottom groove is essential and the existence ofthe bottom groove is especially essential to the realisation, in which the joining of the coating elements is carried out by means of the joint projections 5.

One must still notice that the reception groove or joint groove 41 and the joint element 5', 5" or the joint projection 5, which fits therein, can be shaped in a way that differs very much from the way illustrated in the figure. The joint can be a fit joint, an adhesive joint or for example a locking joint. The joint can be carried out also without the joint element or joint projection, in which case the opposite joint grooves form heat transfer channel (cf. for example the Figure FIG.2, in which the joint has been carried out with joint element 5', 5")

When there is used circulating heat transfer medium in the coating assemblage, the heat transfer medium is advantageously fluid or gaseous medium that flows or runs in a laminar or turbulent manner. In general, the medium is most advantageously fluid, advantageously oil or water or gas or air. Any heat transfer medium, which does not damage the coating assemblage, can run or flow also in an unhandled heat transfer channel 43.

The heat transfer medium can be also in a form of fog, in which case it has the better reception properties and delivery properties of the heat. The fog also gets in a better cooperation with the surface of non-plated or unsealed wooden set of heat transfer channels and the same can also get into the wooden material. In the fog solution a small sprinkler device can be used.

The heat transfer channels, which are in the coating and/or for example in the Platon^{™} underlay layer or in another base layer, can also be flow channels of a heat transfer. They can be carried out by means of supporting means or surface forms of channels, which accomplish turbulent flow. The support in question can cover the whole area of the coating. In that case there is provided a flow space between the coating and a flat-faced underlay/base layer the bottom grooves of the coating elements. The form of plates of the heat transfer has been formed so that even a small flow in the heat transfer will be turbulent strongly. The turbulent flow in the set of flow channels improves automatically and significantly the internal cleaning of the set of the channels.

One must emphasise that the heating means is not necessarily any heat transfer medium that flows in the feat transfer channel 4, 4', 4", 4"', 4"". Because the heating can be carried out by means of the heating means that has been arranged in the channel, such as by means of a heat division 6', 6" (cf. the figures FIG.7b, FIG.7c). The heating means or the heating medium there inside can be or warmed, for example by means of an electric resistance element, in which case the element gives heat to the coating 31 like the flowing heat transfer medium. The heating means can also be a heat element, which has been arranged to the heat transfer channel 31 corresponding totally or partly the form of the internal surface thereof, in which case the heating means warms the coating element 31 (cf.. FIG.7a) directly by conduction.

Reference is made to the figures FIG.7a, FIG.7B and FIG.7c. When there a cavity part 6' or an elastic hose means 6" in the heat transfer channel 4, there is possibility, for warming the heat transfer medium, to fit a massive heat division element 6 in the cavity part or in the elastic hose means. When the heat transfer medium is in the channel, there is also the massive heat division in the heat transfer channel.

To prevent the leak of the fluid heat transfer medium to the upper surfaces of the assemblage 1, 2, 3 or to the joint seam, it is recommended that there is the cavity means, such as a thin-walled hose 6", in which the medium can flow, in heat transfer channel 4, 4', 4", 4"', 4"". To prevent the leak, the heat transfer channel can also be plated and/or sealed.

The sealing of the surfaces defining heat transfer channels can be carried out for example with thin transparency or by soaking and by hardening oil to the surfaces of the heat transfer channel. The advantage of the oil is that the thermal conductivity and the duration of other properties of the wooden coating 3 composed of the coating elements 31 become improved. Alternatively, the tightness of coating elements can be secured by using for example elastic installation glue in the installation.

There is a reason to use the hose 6" or the transparency if it used as the heat transfer medium fluid, such as water, which damages at least a tree based coating.

The sealing of the inner surface of the heat transfer channel's 4, 4', 4"', 4"', 4"" the can be omitted when for the heat transfer is used materials/mediums that do not damage the coating assemblage, 1, 2, 3, In order to provide a sealing that is suitable to the purpose thereof, the whole outer surface or the use surface of the coating assemblage, which consists of elements 31, is sealed with a transparency and the lower surface and the side surface are equipped with a sealing plate, such as for example by Platon^{™} underlay plate.

Of course one can seal both the set of the heat transfer channels and the desired outer surface. In that case a double-secured circulation of the heat transfer medium in the coating assemblage will be accomplished. The possibility of the leak can also be reduced or removed: by recycling the heat transfer medium in the channel by a low pressure or vacuum instead of an overpressure; by using on the overpressure that is as small as possible; or by using simultaneously both low pressure and the overpressure simultaneously.

When there is chosen an electric heating solution to the coating assemblage 1, 2, 3, the heat division elements 6 will be electric resistance cables, which are in the heat division channels 4, 4', 4", 4"', 4"". The heat division element run in the heat transfer channel as such or the cavity means 6", such as a hose or pipe means, is fitted in the heat transfer channel is 6, in which case the electric resistance cable goes inside the cavity means.

To intensify the heat transition from the heat transfer channel 4, 4', 4", 4"', 4"" to the coating elements 31, the heat transfer channel can be filled, as it is known, with the mass or fluid which conducts heat well. Then a heat source or another source of energy, which feeds thermal energy, can be connected to the filling of the heat transfer channel or to the e cavity means 6", which surrounds the filling, in which case the coating assemblage functions like a reserving heating battery. It is to be noted that the cavity means can be also as such an electric resistance 6", in which case the assemblage functions like reserving electric heating radiator.

In general, one can state that the heating means b, 6', 6" can extend uniformly over the whole area of the coating surface to be warmed, for example so that the heating means will run from one side of the coating element 31 to a second side thereof via at least one groove that is done to the end side of the element, which groove can be a female joint element. In that case the heating means 6, 6', 6" can run from a closed channel 4, which is done to form an extension of the joint groove, to a second similar channel via a groove, which is in the end of element 31, at the side of the coating 3.

Reference is made to the figure FIG.1. The coating assemblage consists the intermediate layer 2 that is arranged above the supporting structure 1, the strength of which intermediate layer is has been illustrated by the dash line, and the coating 3 that is arranged above the intermediate layer, which coating consists of coating elements 31 to be joined together. In the coating assemblage 1, 2, 3, the coating elements are connected with the interlocking joint so that one of the neighbouring coating elements includes the male interlocking means, which comprises the projection 5 that forms the joint abutment, while the second of the neighbouring coating elements includes the female interlocking means, which includes the reception groove, in other words the joint groove 41 that receives the projection.

In the embodiment ofthe figure FTG.1, the joint groove 41 has been made as the extension of the bottom groove 42. To accomplish the heating solutions, which is to be integrated into the coating 3, when the projection 5 has been adapted into joint groove 41, to its place, the bottom groove 42 serves as such as the heat division channel 42 or a heat division element 6, 6', 6" is placed into the bottom groove, which element can be for example the massive element 6, which is in accordance with the figure FIG.7, the cavity element 6', which is in accordance with the figure FIG.7b, or the elastic pipe element 6", which is in accordance with the figure FIG.7c.

In the embodiment of the figure FIG.1, the joint groove 42 forms channel 4 for receiving the heat division element 6, 6', 6" to be fitted therein so that the form of the outer circumference ofthe element corresponds at least partially to the form, which is formed of the surfaces, which defines the heat transfer channel and which are a forehead surface 52 of the projection 5, the bottom surface 43 of the bottom groove and the opposite side surfaces 44 of the bottom groove. It is considered especially advantageous that the heat division element is partly or as corresponding to the form inside the bottom groove 42 that is as the lengthening ofthe joint groove 41.
In that case the profile form of cross section of the heat division element 6, 6' corresponds to or the profile form of cross section of the elastic pipe element 6", which is meant to be the heat division element, changes to correspond to the internal profile form of the cross section of the heat transfer channel 4.

Reference is made to the figure FIG.2, in which a coating assemblage, which is in accordance with a second advantageous embodiment, has been presented. The assemblage includes the coating 3, which is arranged above the supporting structure 1 and which comprises the elements 31 to be connected. In the coating assemblage 1, 2, 3 of the figure FIG.2, the coating elements are connected with the interlocking means so that there are made joint grooves 41, that is female joints, to the opposite side surfaces to the coating elements that are next to each other. The coating elements have been connected to each other by means of the joint element, 5', 5", which fits into the opposite joint grooves, which this way will function as the reception grooves of the joint element. The joint element functions as the heat transfer channel 4' and, in addition to the joint function, it carries out 6 thus, as the heat transfer element 6', 6", the heating function.

In order to disclose the difference between the embodiment of the figure FIG.1 and the embodiment of the figure FIG.2, the bottom groove 42 has not been made to lengthen the joint groove 41. So in the embodiment of the figure FIG.2, the heat transfer channel is formed of the joint groove 41 and in the embodiment of the figure FIG. 1 the heat transfer channel is formed of the bottom groove 42 that is as the lengthening of the joint groove.

In the embodiment of the figure FIG.2, the joint grooves 41 have been made to the opposite side surfaces or to the endwise hitting end surfaces of coating elements 31, which joint grooves are as high, in their whole depth, and most advantageously interlocking joint grooves. The coating elements have been connected to each other by means of the joint element, 5', 5", which is filled with filling material and which forms the joint list. The joitn element can be a massive element or a cavity part or the same can be filled with the filling. In the form of the joint list, the joint element, the joint element reaches over at least one joint of the joint elements, in other words into at least to two joint grooves. In that case the joint element will accomplish an interlock between the coating elements.

One can choose a joint element that carries out the joint list either the massive heat division element 6', which is in accordance with the figure FIG.7a, such as an electric resistance, or the cavity element 6", which is in accordance with the figure FIG.7b, and which can serve as the recycling means for the heat transfer medium.

When the joint element 5" is a hollow joint list, the joint element can function, in addition to its joint function, as the recycling channel for the heat transfer medium and/or as the channel for the internal heating means such as for example of electric cable. Naturally, the joint element can also be a filled with a flowing heat transfer medium, in which case it becomes possible that the heat division to the whole room space over the whole area of the surface of the coating 3 is even. The joint element can also be a joint member that contains the filling material. Then the filling material can be heated for example by means of the internal heating cable, such as by means of the electric cable.

In the embodiment of the figure FIG.2, the opposite joint grooves 42 form the heat transfer channel 4, which can receive the heat division element 6, 6' so that the form of the outer circumference of the heat division element corresponds at least partially to that form, which is composed of the surfaces of joint grooves, which are the bottom surfaces 43 of joint grooves and the opposite side surfaces 44 of the bottom grooves. It is especially advantageous that the form of the heat division element corresponds partially or completely to the form of the space that is inside the opposite joint grooves 41. In that case, cross section profile of the heat division element 6, 6', 6" corresponds to the form of the profile of the internal cross section of channel 4 according to the form of the cross section thereof.

Further in the embodiment of the figure FIG.2, the dimensioning of joint grooves can be chosen so that it becomes possible to adapt into a space, which is defined between the forehead 52 of the joint element 5', 5" and the bottom surface of the joint groove 42, the elastic pipe element 6", which is in accordance with the figure FIG.7c and which can serve in the coating 3 alone as the heat division element or just as an additional heat division source.

Reference is made to the figure FIG.3, in which a coating assemblage, which is in accordance with a third embodiment, has been presented. The assemblage includes the intermediate layer 2, which is arranged above the supporting structure 1 and which comprises a lower support layer 21 and/or a thin protection or transparency layer 22, the strengths of which have been illustrated schematically by the dash lines. Thee layer 21 can be also above the layer 22. The coating 3, which comprises the coating elements 31 to be connected, has been arranged above the intermediate layer. The coating element that is provided with interlocking joint projection 5 is the multilayered containing a core layer 312 as well as the bottom layer 313 and the surface layer 311.

From the point of the present invention it not significant functional meaning, what are the materials of the layers 311, 312, 313. By the presenting the layered construction one has indeed been brought out the fact that the integrated heating solution can be adapted to different kind of coating elements one can think about.

The coating assemblage 1, 2, 3 of figure FIG.3 coating assemblage differs from the assemblages of the figures FIG.1 and FIG.2 differ as follows.
- In the left joint of the coating elements 31, the coating elements are connected by means of the interlocking joint, which is accomplished by the interlocking joint projection 5 according to the figure FIG.1. In that case, one of the adjacent coating elements is provided with the male joint means with the projection while the second of the adjacent coating elements is provided with female joint means with the groove. So the projection 50 of the male joint means fits in the joint groove 41 of the female joint means. Furthermore, there is as an extension of female joint means the bottom groove 42, which is or to which a heating means is to be adapted a heating means, for example the heat division element 6, 6, 6", and
- In the right joint of the coating elements 31, the coating elements 31 are connected by means of the interlocking joint, which is accomplished by the interlocking joint element 5', 5" according to the figure FIG.2. In that case, to the opposite side surfaces of the adjacent coating elements have been made female joint means with grooves, in other words the joint grooves 41, and the coating elements are connected to each other by means of the joint element that fits into the grooves. So there is accomplished the joint function by the joint grooves, when the joint groove receives the joint element, and the heating function, when the received joint element 5', 5" is the heating means for example the heat division element 6', 6', 6".

One aspect of the figure FIG.3; in addition to illustrate that different joint solutions can be applied for the coating, is to illustrate different kind of possibilities to joint and adapt into place heating elements 31 according to the figures FIG.1 and FIG.2 to accomplish an uniform coating 3.

In addition to the fact that on the joint element has the function, which connects coating elements, the joint element 51 according to the embodiment of the figure FIG.3 can be composed of an element, which is composed of an electric resistance cable of massive material and necessary for electric heating solution.

Reference is made to the figures FIG.4, FIG.5 and FIG.6. In the figures has been presented a coating assemblage, which comprises the supporting structure 1 onto the intermediate layer 2 and the coating 3 arranged onto the intermediate layer 2. The coating is composed of the coating elements 31 that have been connected together. As can be further seen from the figures, for receiving the heating means 6, 6', 6", there are formed channels 4, 4"', 4"" to the coating assemblage 1, 2, 3 by means of the grooves and/or deepenings and/or bores 42, 48, 49. The heating means can be composed of a heat division element and/or heat transfer medium and the form of the cross section profile of the outer circumference corresponds at least partially to the form of the surface that defines the channel.

There is also tried to illustrate in the figures FIG.4, FIG.5 and FIG.6 the essential feature that to accomplish the heating and heat transfer channel 4"', 4"" for the heating means 6, 6', 6", there can be grooves 49 at the side of the bottom surface of coating element 31 and/or there can be grooves 48 in bottom surfaces of the coating element.

Thus the heating means 6, 6', 6" can also run in the groove 48 that has been done to the bottom surface of the coating element 31 or to the upper surface of the one supporting layer 1 or, in case the intermediate layer 2 is included in the coating assemblage, in groove 49 that has been done to the upper surface of the intermediate layer. This kind of a groove 48, 49 is closed for accomplishing the heat transfer channel 4"', 4"" by layers of the coating assemblage pressing against each other , that is the coating 3 and the intermediate layer 2 or the coating 1 and the supporting layer 1.

The intermediate layer 2 can be an installation plate with rises, which plates, such as for example the Platon^{™} installation plate, are freely for trade at the markets, whereby the rises are to be directed preferably against the supporting layer 1. In this kind of a structure, the coating elements 31 are fastened to an installation plate, in which case the groove 48 in the bottom surface of the coating element forms with upper surface of the installation plate the closed heating channel 43 for the heating means 6, 6', 6". The heat transfer medium can be medium to be warmed or any medium to be circulated for example via a heat transfer unit, like fluid or gas.

Reference is made to the figure FIG.4. The heat transfer channel 4"' for the heating means 6, 6', 6" can be accomplished, when the coating 3 settles against a lower intermediate layer 2 or when the coating settles against the supporting carrying layer while the intermediate layer is missing, the heat transfer channel 4"', by the grooves 48 that have been made to the bottom surfaces of coating elements.

Reference is made to the figure FIG.5, which presents a fifth advantageous embodiment of the invention. The heat transfer channel 4"' for the heating means 6, 6', 6" can be accomplished, when the coating 3 settles against the lower intermediate layer 2, which is more preferably the two-layered according to the embodiment of the figure or which settles against, if the intermediate layer is missing, against the supporting layer, by the grooves 49 that have been made to the upper surface of intermediate layer 2 or the supporting layer 1 that in under the coating element 31.

According to the embodiment of figure FIG.5, The intermediate layer 2 provided with grooves 49 is under the coating 3, coating and the intermediate layer is two-layered. Does the intermediate layer have the thinner layer 21 or the more supporting layer 22 as the lower layer or as the upper layer depends on the materials of the coating assemblage and on manner of heating. It also is possible that those two layers are not needed but there is only one layer in the intermediate layer 21. It is possible can be used to hinder an access of heat transfer medium to the coating by means of the thin transparency layer 21 and use of thin and elastic material, such as plastic mat, as the coating can be made possible by means of more rigid plate layer 22.

Reference is made to the figure FIG.6, which presents a sixth advantageous embodiment of the invention is referred to. By means of the grooves 48 that have been done to the 3 lower surfaces of the coating 3 and by means of the grooves 49 that have to the upper surface of the one lower intermediate layer 2 or of the supporting layer 1, it is possible to accomplish, when the grooves that have been made excluding heat transfer medium usage face to face and when the coating settles against the lower intermediate layer or, if the the intermediate layer is missing, against the supporting layer, heat transfer channel 4"', 4"" for the heating means 6, 6', 6", which channel is so partly in the lower surface of the coating 3 and partly either in the upper surface of the intermediate layer 2 or in the upper surface of the supporting layer 1.

Reference is made to the figures FIG.4, FIG.5 and FIG.6. Some advantageous heating means are, for example the massive heating element such as for example electric resistance of the figure FIG.7a; the cavity element, which is in accordance with the figure FIG.7b, in which heat transfer flows or which is a filled with heat transfer means, which can be warmed with an electric resistance; the elastic flow pipe for heat transfer medium according to the figure FIG.7c; or a sealed or an unsealed heat transfer channel 4 that has been filled with heat transfer medium.

Reference is made to the figure FIG.8. In the coating assemblage 1, 2, 3, heat transfer medium will come into the heat transfer channels 4, 4', which are parallel with the length of the coating elements 31, through the feeding channels 8 of the medium, which are crosswise in relation to the lengths of the coating elements, of the medium of elements the medium and the medium leaves the heat transfer channels, which are parallel with the length of the coating elements, through the removal channels 9 of the medium, which are crosswise in relation to the lengths of the coating elements. So the medium flow direction or the run direction of the heat division elements between the feeding channels and the removal channels are parallel in the heat transfer channel next to each other. The feed channel 8 and the removal channel 9 of the medium are composed preferably of channels that are accomplished by means of the grooves in the end sides of the coating elements 31 or by means of the installation plate 2 of the coating 3.

According to the figure FIG. 8, the flow of the medium in the coating assemblage 1, 2 3 is parallel in the heat transfer channels 4, 4' that are next to each other. It is advantageous that the circulation of the medium corresponds essentially to the circulation of the medium in a heat exchanger of a flow-through type.

There is also illustrated in the figure FIG.8, heat transfer channels 4" that are transversal in relation to the parallel channels 4, 4', which are parallel with the length of coating elements 31, and which transversal channels 4" have been made to reach from one side of the coating element to the second side of the coating element page, coating and are in relation to the side of the coating element in an angle of essentially 90°

Reference is made to the figure FIG.9. The set of heat transfer channels that is formed of the heat transfer channels 4, 4' for the heat transfer medium or for the heat division element 6, 6', 6" has been integrated into the coating assemblage 1, 2, 3.

In the coating assemblage 1,2,3, the heat transfer medium will come into heat transfer channels 4, 4', which are parallel with the lengths of coating elements 31, through crosswise channels of coating elements. After this, the medium flows or the heat division element runs from one end ofthe longitudinal channel of the consecutive coating elements to the second end of the longitudinal channel, in which the longitudinal channel, which is a part of the set of the heat transfer channels, opens to the following crosswise channel, which opens to the consecutive longitudinal channel, coating of the consecutive, a heat transfer. So, the heat transfer channel runs consecutively through crosswise and longitudinal channels until a desired heating area is covered.

In the embodiment of the figure FIG:9, the medium flows or heat division element 6 comes to the coating element 31 of the coating assemblage 1,2,3 through the crosswise feeding channel 8, and the heat transfer medium or the heat division element leaves the assemblage through the crosswise removal channel 9, which is in the coating element.

The essential difference of the embodiments of the figures FIG.8 and FIG.9 is that the flow direction of the heat transfer medium or the run direction of the heat division element, according to the embodiment of the figure FIG.9, changes, that is the directions are opposite in the consecutive, advantageously parallel heat transfer channels.

In accordance with the present invention, one can state generally that a second longitudinal edge surface of the coating element 31 can be also without extensions (not presented in the figures), in which case the element can serve as a border element of the coating to be formed.

One should note that the invention has not been disclosed above only by means of individual examples. So many alternative solutions and modifications as well as functionally equivalent embodiments are possible within the inventive basic idea the protection scope of which has been defined only by means of the accompanying claims.

The embodiments, which belong to the scope of the protection scope, can among others be as mentioned below.

Embodiments, in which the coating element comprises in addition to the edge grooves a groove or grooves in the bottom surface. Then the coating assemblage may include a heating means also at the bottom side of the coating.

Embodiments, in which the coating element coating comprise the longitudinal grooves and transverse grooves for receiving the joint extension, such as an interlock projection or a special joint unit or a joint list In this way, the flow channel of heat transfer medium or a space for a heat division element is formed in a cavity space that is defined by the bottom surface of the longitudinal groove and/or end groove and side surfaces as well as the forehead surface of the joint extension or the joint unit that has been fitted in the longitudinal groove and/or in the end groove.

Embodiments, in which the coating element comprise in addition to the longitudinal grooves or end grooves a groove or grooves in the bottom surface of the coating element. Hence, the flow channel of the heat transfer medium or the cavity space of the heat division element will form between the bottom groove, which runs in the bottom surface of the coating element, and the intermediate layer, which is to be installed under the coating element, such as a plastic Platon^{™} base sheet.

Embodiments, in which the coating element comprise in addition to the longitudinal grooves and/or the end grooves and/or the bottom grooves also channels, i.e. inner channels, which run inside the coating element. This kind of an inner channel can be made without problems by for example drilling or, when the coating element is a multi-layered element, by forming the inner channel to the border zone of those two layers, which are joined to each other.

Embodiments, in which the coating element comprise borings, which run in angle in regard to the longitudinal side or end side thereof but which run in the direction of the level of the bottom surface, for the flow of the heat transfer medium or for the heat division element. This kind of a boring is closed to be a cavity space by another element to be fitted next to the coating element.

## Claims

1. A coating assemblage for a floor or a wall or roof, which assemblage comprises a supporting layer (1) and selectively an intermediate layer (2), which is arranged on the supporting layer, and a coating layer (3), which is arranged on the intermediate layer or a coating layer, which is arranged without the intermediate layer on the supporting layer, wherein the coating layer consists of joined coating elements (31), **characterized in that** there are formed to the coating assemblage by means of grooves and/or hollows and/or bores (41, 42, 47, 48, 49) heat transfer channels (4, 4', 4", 4"', 4"") for receiving heat division elements and/or heat transfer medium of heating means (6, 6', 6", 6"', 6""), whereby a cross section profile or the form of an outer circle of the received heating means corresponds at least part of the form of the surface defining the channel.

2. Coating assemblage that is in accordance with the patent claim 1, **characterized in that** the heating means (6, 6', 6") have been arranged in the channel (4'), which is limited inside two adjacent female joints (41) of massive and/or multi-layered coating elements (31; 311, 312, 313).

3. Coating assemblage that is in accordance with the patent claim 3, **characterized in** joint part (5, 5', 5"), which is to be fitted inside two adjacent female joints (41) ofmassive and/or multi-layered coating elements (31; 311, 312, 313) and which composes the heating means.

4. Coating assemblage that is in accordance with the patent claim 3, **characterized in that** the joint part (5; 5', 5") is selectively a massive heating element (6), a cavity part is (6') or a heat division means that arranged inside the cavity part (6', 6").

5. Coating assemblage that is in accordance with any of the patent claims 4, **characterized in that** the tongue joint or the joint part has a form that advantageously corresponds to a parallelepiped.

6. Coating assemblage that is in accordance with any of the patent claims 1...6,
**characterized in that** the heating means (6, 6', 6") is, selectively, partly or totally inside the channel (4) and its form corresponds partly or totally the form of the channel (4), which is defined by the female joint (41) and the joint tongue (5), which is fitted inside the female joint, or partly or totally inside and its form corresponds partly or totally the form groove (48), which is in the bottom side of the massive or the multi-layered coating element (31; 311, 312, 313).

7. Coating assemblage that is in accordance with any of the patent claims 1...6,
**characterized in that** the channel (4"'), which receives the heating means (6, 6', 6"), is defined selectively
- by the groove (48), which is in the bottom side of the coating element, and the upper surface of the intermediate layer (2) or the supporting layer (1) that is against the massive and/or multi-layered coating element (31; 311,312,313), or
- by the bottom side of the coating element (31; 311,312,313), and the groove (49), which is in the upper surface of the intermediate layer (2) or the supporting layer (1) that is against the coating element.

8. Coating assemblage that is in accordance with any of the patent claims 1...7,
**characterized in that** the channel (4"', 4""), which receives the heating means (6, 6', 6"), is defined by the groove (48), which is in the bottom side of the massive and/or multi-layered coating element, and the groove (49), which is in the upper surface of the intermediate layer (2) or the supporting layer (1) that is against the coating element (31; 311, 312, 313).

9. Coating assemblage that is in accordance with any of the patent claims 1...8,
**characterized in that** at least one groove and/or hollow and/or bore (41) exists inside and/or at the side edge of the massive or multi-layered coating element (31; 311, 312, 313) for the heat division element (6, 6', 6"), whereby the groove and/or hollow and/or bore, which extends from the side edge inside the coating element, is open to the side edge, whereby the said groove and/or hollow and/or bore in the coating element is closed to compose the channel (4, 4', 4") by an adjacent second coating element, which has been arranged next to and in the contact with it.

10. Coating assemblage that is in accordance with any of the patent claim 1...9,
**characterized in that** the form of the cross section profile of the heating means (6, 6', 6"), that is the heat division means or the heat transfer medium, corresponds advantageously at least to a part of the internal cross section profile of the channel (4, 4', 4"), or more advantageously essentially to the internal cross section profile of the channel (4, 4', 4"), or most advantageously to the internal cross section profile of the channel (4, 4', 4") with the form of the same.

11. Coating assemblage that is in accordance with any of the patent claims 1...12,
**characterized in that** the channel (4, 4 ') extends essentially from one to its second end of the massive or multi-layered coating element (31; 311, 312, 313) being situated on at least one edge side of the coating element

12. Coating assemblage that is in accordance with any of the patent claims 1...11,
**characterized in that** the massive or multi-layered coating element (31; 311, 312, 313) comprises a channel (4"), which extends from one edge side of the coating element or from one female joint inside the coating element and terminates inside the coating element or extends to the second edge side of the coating element or to the second female joint.

13. Coating assemblage that is in accordance with the patent claim 12, **characterized in that** the channel (4") extends inside the massive or multi-layered coating element (31, 311, 312, 313) in an angle in regard to the edge side thereof, which angle is advantageously <90□ or >90°, or more advantageously essentially 90°.

14. Coating assemblage that is in accordance with any of the patent claims 1-13,
**characterized in that** the heating means (6, 6', 6") may be circled from one side to the second side of the massive or multi-layered coating element can (31; 311, 312, 313) via at least groove, such as for example a female joint, which groove has been formed to the end side.

15. Coating assemblage that is in accordance with any of the patent claims 1-14,
**characterized in that** the heating has been carried out by means of the heating means (6, 6', 6"), which can be an electric or a medium circulating heat division element

16. Coating assemblage that is in accordance with the patent claim 15, **characterized in that** in the heat transfer the medium for the medium circulating heating means (6', 6") is a fluid, such as water or oil, or gas, such as air.

17. Coating assemblage that is in accordance with the patent claim 16, **characterized in that** in the flow of medium to be in the heat circulating heating means (6', 6") can be laminar or turbulent, whereby the medium can circulate also in the form of existence that deviates from the form of fluid, for example as a steam or as a gas or as a fog in the form.

18. Coating assemblage that is in accordance with the patent claim 17, **characterized in that** the heating means is a mass-filled or a fluid-filled cavity means (6'), advantageously a pipe means.

19. Coating assemblage that is in accordance with any of the patent claims 11-14,
**characterized in that** the channel (4, 4', 4", 4''', 4"") comprises for the fluid-like heat transfer medium thin-walled hose (6") and/or the channel has been sealed or the inner surface of the channel at least partly is not sealed.

20. Coating assemblage that is in accordance with any of the patent claims 1-19,
**characterized in that** the longitudinal grooves existing in the massive or multi-layered coating element (31; 311,312,313), i.e. the side grooves (41, 42), as well as advantageously also transverse grooves, i.e. the crosswise grooves, operate for receiving therein the abutment projection (5) or the joint part (5', 5"), more advantageously for receiving therein the joint list, whereby the flow channel for the heat transfer medium or the space (4) for the heat division element (6, 6', 6") is formed in regard to the length of the coating element inside the longitudinal and/or crosswise cavity that is defined by a bottom surface (43) and side surfaces (44) of the longitudinal/crosswise groove and the forehead surface (52) of the joint projection or the joint part.

21. Coating assemblage that is in accordance with any of the patent claims 13-20,
**characterized in that** the heating means (6, 6', 6") is fitted in the coating assemblage's (1, 2, 3) channels, which are parallel with the length in regard to the advantageously massive or multi-layered coating elements (31; 311, 312, 313), via a common feeding or input channel (8) existing in the assemblage, which is advantageously transverse in regard to the coating elements, and that the heating means leaves the coating assemblage via a common removal or output channel (9), which is advantageously transverse in regard to the coating elements.

22. Coating assemblage that is in accordance with the patent claim 21, **characterized in that** the flow of the medium in the coating assemblage (1, 2, 3) is selectively parallel or opposite in the parallel heat transfer channels (4, 4', 4"', 4"").

23. Coating assemblage that is in accordance with any of the patent claims 16-22,
**characterized in that** the heating means (6, 6', 6") is composed of heat transfer medium circulation, and that the heat transfer medium can be can be selectively circulated with the help of the vacuum, with the help of the overpressure or at the same time with help of the vacuum and the overpressure.

24. Coating assemblage that is in accordance with any of the patent claims 21-23,
**characterized in that** the feeding or input channels (8) and removal or output channels (9) are composed of grooves/channels, which are in the end sides or very near thereof of the massive or multi-layered coating elements (31; 311, 312, 313), or of an underlayer (21, 22), which belongs to the intermediate layer (2) that is under the coating.

25. Coating assemblage that is in accordance with any of the patent claims 1-24,
**characterized in that** the coating, which is composed of massive and/or multilayered coating elements (31; 311,312,313), is on the intermediate layer (2), the lower surface of which comprises risings, so there exists open space between the intermediate layer (2) and the support layer (1), whereby the lower surface of the intermediate layer (2) can also be used for heat conveyance for example by circulating air of the room under the same or correspondingly by conducting for example warm air under the intermediate layer (2).

26. A coating element for a floor, wall or roof, which element is meant to form when placed sidewise and/or endwise on a supporting constructing (1) or on a lower intermediate layer, which is under the coating, the coating (3) to resurface a floor, a wall and/or ceiling,
**characterized in that** the coating element (31; 311, 312, 313) comprises heat transfer channels (4, 4', 4", 4''', 4"") for receiving a heating means (6, 6', 6"), i.e. heat division element and/or heat transfer medium, which heat transfer channels are formed by means of grooves and/or deepenings and/or borings (41, 42, 47, 48, 49) and the cross section profile of a flow area of which or the form of the outer circumference of which corresponds at least part of the form of outer circumference of the heating means.

27. A coating element that is in accordance with patent claim 26, **characterized in that** the coating element is an element of massive wood, such as for example mosaic parquet element, bar parquet element, boarded floor element or a corresponding element solution; or a wood material including or wood-based element, whereby the coating element is advantageously a multi-layered coating element, which comprises at least material layer of wood material or a wood-based material layer, which can be an inner layer or a surface layer, multi-layered coating elements are different board parquet solutions, laminate solutions and wood laminated solutions; or a non-wood element.

28. A coating element that is in accordance with the patent claim 26 and/or 27, **characterized in that** there is a thin-walled hose (6") in channel (4, 4', 4", 4"', 4"") and/or the channel has been sealed or the inner surface of the channel at least partly is not sealed for the heat transfer medium.
